Europäisches Patentamt

**European Patent Office**

**Office européen des brevets**

(11) Publication number : **0 328 894 B1**

# (12) EUROPEAN PATENT SPECIFICATION

(45) Date of publication of patent specification :
**25.03.92 Bulletin 92/13**

(51) Int. Cl.⁵ : **D04B 15/90**

(21) Application number : **89100943.3**

(22) Date of filing : **20.01.89**

(54) Automatic device for stretching longitudinally and transversely a web of knitted fabric.

(30) Priority : **19.02.88 IT 1242288**

(43) Date of publication of application :
**23.08.89 Bulletin 89/34**

(45) Publication of the grant of the patent :
**25.03.92 Bulletin 92/13**

(84) Designated Contracting States :
**CH DE ES FR GB LI**

(56) References cited :
**CH-A- 323 578**
**FR-A- 1 120 976**
**FR-A- 2 089 243**

(73) Proprietor : **COMET MARTINELLI S.r.l.**
**Via Risorgimento 2**
**I-48018 Faenza (Ravenna) (IT)**

(72) Inventor : **Bernardelli, Giancarlo**
**2, Via Risorgimento**
**I-48018 Faenza (IT)**

(74) Representative : **Porsia, Attilio et al**
**c/o Succ. Ing. Fischetti & Weber-Dr. Porsia Via Caffaro 3/2**
**I-16124 Genova (IT)**

## Description

Flat knitting machines provided with automatic devices or stretching longitudinally and transversely a web of knitted fabric are already known in the prior art from FR-A-2 089 243. These machines are equipped with a single threaded bar counter-acted by a parallel spring-loaded roller and are not provided with a mechanism to clear automatically the path of an automatic side-transporting device, e.g. a comb. This comb normally submits the web being produced to a longitudinal stretching and automatically regulates the tension as a function of the width of said web. When the machine is pre-arranged for the production of shaped webs and is equipped with automatic decreasing and increasing devices, the action of the web-stretching comb is efficient only during the initial step of the web-producing cycle because when said web exceeds a certain length, its elasticity will not ensure a uniform and even tensioning of the loops, whereby the latter might not be caught correctly by said automatic side-transporting devices.

The invention aims to overcome this disadvantage by means of a device of simple construction and of high technological reliability, which comprises below the needle-bars and at the top portion thereof, i.e. as close as possible to the operative area of said needle-bars, a pair of parallel screws adapted to operate transversely of the web being produced and each provided with opposite threads and so powered and synchronized as to submit said web to an efficient stretching both in the longitudinal and transverse directions.

Further characteristics of the invention and the advantages resulting therefrom will become apparent from the following description of a preferred embodiment thereof, shown as a non-limiting example in the Figures of the accompanying single sheet of drawings, wherein:

Fig. 1 is a diagrammatic top plan view of the two stretching screws;

Fig. 2 is a top plan view showing the connection of the two stretching screws to the respective rotation means;

Fig. 3 is a side view of the needle-bars of the machine with the stretching screws;

Fig. 4 is a front elevational and partly sectional view of one of the end supports for the stretching screws;

Fig. 5 is an enlarged plan view showing the outline of the threading of the stretching screws;

Fig. 6 is a cross sectional view on the line VI-VI of Fig. 5, showing further details of the screws co-operating with the web to be stretched;

Fig. 7 shows the stretching screws of Fig. 3, but in the opened condition corresponding to the end of the lifting stroke of the web-stretching comb;

Fig. 8 is a block diagram of the electronic control circuit for the motor which actuates the stretching screws.

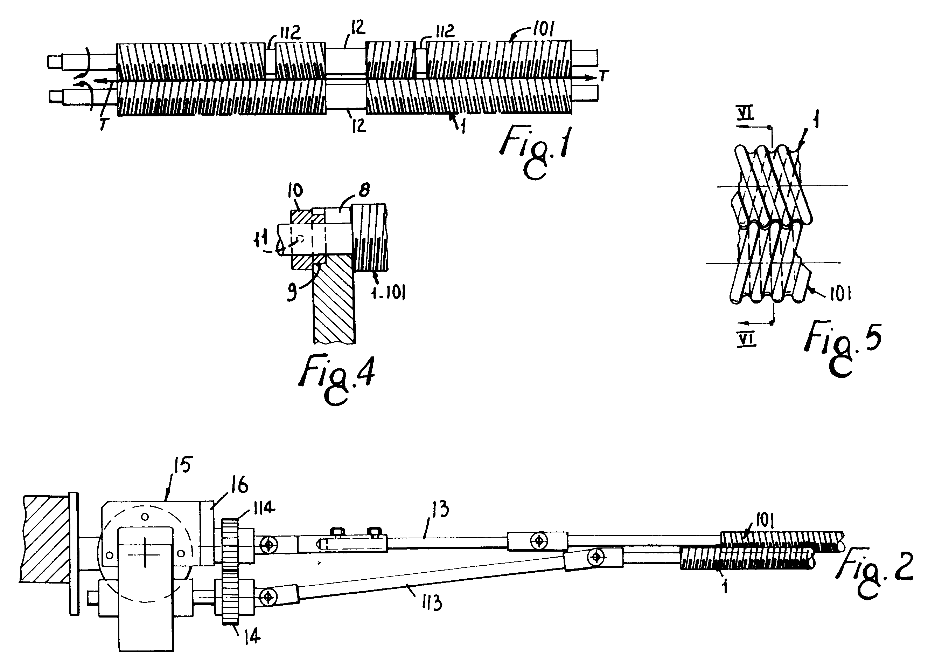

With particular reference to Fig. 3 of the drawing, below the needle-bars FA and FP of the knitting machine there are arranged, at a short distance from the top end of said needle-bars and parallel to said top end, screw members 1-101 whose length is substantially the same as or suitably longer than that of said needle-bars, and one of which, e.g. the screw 1, is rotatably supported by stationary supports (not shown), is arranged at a short distance from the needle-bar FA thereabove and is suitably spaced from the imaginary vertical plane whereon the web-stretching comb P of the machine is moved (see Fig. 7), so as to avoid any interference with the latter member at the beginning of the cycle for the production of each knitted web (see below).

The screw 101 is arranged below the axis of the screw 1, for the following reasons: to be far enough from the needle-bar FP, so as to be spaced adequately from the screw 1 when needed; to make the web T being produced by the machine pass between the screws 1-101 along a sinuous path of travel to make it enwrap said screws extensively, whereby the latter can best perform their longitudinal and transverse stretching action on said web (see below).

The screw 101 is rotatably supported at the ends thereof by a pair of bell-crank levers 2, oriented downwards, inter-pivoted at 3 on the frame of the machine and connected at the other ends thereof to a resilient means 4 which can be calibrated by means of an adjustment nut 5. The arm 102 of the levers 2 is suitably shaped on the edge 6 facing the needle-bar FA so that when at the beginning of each working cycle the web-stretching comb P is lifted and inserted in the known manner with its hooks U between the needles of the needle-bars FA-FP, as shown in Fig. 7, the small rollers 7 provided at the ends of said comb will co-operate with the edge 6 of the levers 2 to cause the screw 101 to move away from the screw 1 to avoid any interference of said comb with said screw 101. When the comb is lowered and the hooks U have passed beyond the screws 1-101, said screw 101 moves back to the operative condition of Fig. 3 to nip the web T with a pressure depending on the calibration of the springs 4.

In order to facilitate both the routine and extraordinary maintenance operations on the screws 1-101, the latter are mounted on their supports so as to be removable easily. As shown in Figs. 3 and 4, the supports for the screws comprise an open-top groove 8 whereinto the corresponding end portions and intermediate portions 12, 112 of said screws can be inserted easily (see also Fig. 1). At least in the outer sides of the end supports for the screws 1-101 there are formed annular recesses 9 which are concentric with the axis of curvature of the groove 8 and are adapted for engagement with the reduced end portion of a lock-ring 10 which is locked against axial movement on the end portions of the screws by means of a dowel or pin 11. By removing this pin, the lock-ring 10 can be disengaged from the recess 9 and the screws can be lifted and removed from their supports. In order to easily reach the screws 1-101, preferably, the rear needle-bar FP can be spaced away from the front needle-bar FA according to conventional methods which, therefore, are not discussed further herein.

It will be noted in Fig. 1 that the screws 1-101 are provided with intermediate, symmetrically-disposed grooves 12-112 whereat said screws are supported by suitable supports, even only of fork-shaped type, and such as to avoid any interference with the movement of the comb P, all in a manner which may be easily conceived and worked out by those skilled in the art.

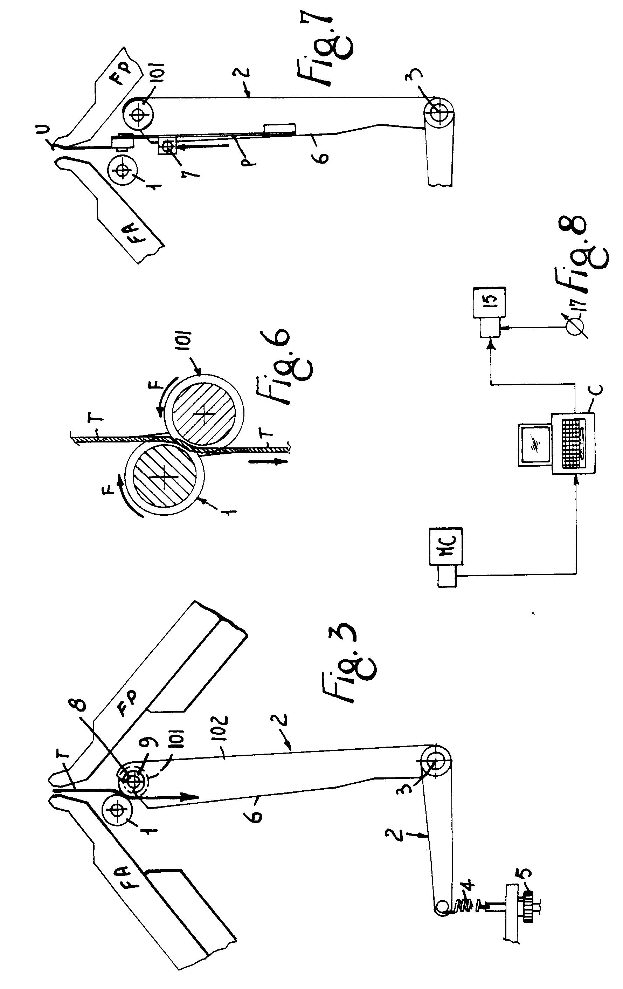

The intermediate grooves 12 define in each screw 1-101 two oppositely-threaded portions, i.e. a right-hand threaded portion and a left-hand threaded portion, whereby during the co-operation with the web T being produced by the machine, as a result of the synchronous rotation of the screws in the directions indicated in Fig. 6 by the arrows F, the web T will be submitted by said threadings, in addition to a suitable stretching in a longitudinal downwards direction, also to a suitable stretching in a transverse direction, so that the loops of the web being sustained by the needles of the needle-bars will be in the best condition to be suitably picked up by the rods or needles of the automatic side-transporting devices, as discussed in the preamble of this specification.

The screws 1-101 are synchronized as described below, and the crests of the thread of a screw operate in the inter-thread groove of the opposite screw, whereby the surface of the web T engaged by said screws is large.

As shown in the detail of Fig. 5, the threads of the screws 1-101 have, preferably, a rounded contour, particularly a type of contour which is quite similar to the Edison contour. Moreover, good results have been obtained by using two-start threadings and with a pitch conforming the fineness of the flat knitting machine that is provided with the device of the invention. In case of machines having fineness 7, the pitch of the screws 1-101, for example, is such as to include 3.5 two-start threads per inch. The screws 1-101, preferably, are chrome-plated and polished or otherwise they are treated so as to have a reduced sliding friction while co-operating with the web T.

With reference to Fig. 2, it will be seen that the screws 1-101 are connected at one end, through small universal joints 13-113, to the shafts of gearwheels 14-114 having the same diameter and meshing with each other, one of which is keyed on the slow-moving shaft of a motor-reducer 15 fixed to the frame of the machine, while the other one is rotatably supported on a support 16 which is fixed to the body of the unit 15. The motor of the unit 15 is of the variable-speed type and is controlled by the computer C provided on the machine (see Fig. 8), which automatically matches the rotational speed of said unit in a manner directly proportional, with the speed of the motor MC of the machine carriage. It is also possible to adjust finely, through a potentiometer 17, the rotational speed of the unit 15 to conform to possible specific requirements. When the machine carriage stops, the unit 15 stops too. Preferably, according to the invention, the unit 15 may also stop during the transport steps. During the normal operative cycle of the knitting machine, the unit 15 usually moves continuously. However, it is to be understood that said unit 15 may also be actuated intermittently.

## Claims

1. An automatic device for stretching both in the longitudinal direction and transverse direction a knitted web (T) being produced by flat-knitting machines, the automatic device being provided at a short distance from the top end thereof and such as to act transversely on the web (T) being produced by the machine, characterized in that it comprises a pair of parallel screws (1-101) arranged below the needle-bars (FA-FP), each screw (1-101) being provided with two oppositely-threaded portions, the crest of the threading of a screw (1) being operative in the inter-thread groove of the opposite screw (101), said screws (1,101) being actuated synchronously in a rotational direction and at a speed such that the web (T) being produced by the machine will be submitted to an adequate stretching both in the longitudinal direction and transverse direction, whereby the loops co-operating with the needles of the machine are always in the best condition to be picked up by the rods and/or needles of the automatic side-transport devices.

2. A device according to claim 1, wherein the stretching screws (1-101) have a threading with rounded contour.

3. A device according to claim 1, wherein the stretching screws (1-101) have a threading with Edison type contour.

4. A device according to claim 1, wherein the threading of the stretching screws (1-101) is a two-start or multiple start threading.

5. A device according to claim 1, wherein the threads of the stretching screws (1-101) have a pitch which is proportional to the fineness of the knitting machine whereon they are mounted.

6. A device according to claim 5, wherein the pitch of the threading of the stretching screws (1-101) includes 3.5 two-start threads per inch when said screws are designed for application on flat-knitting machines having a fineness of 7 needles per inch.

7. A device according to claim 1, wherein the stretching screws (1-101) are chrome-plated and polished or otherwise are treated so as to have a reduced sliding friction upon co-operating with the knitted web (T) to be stretched.

8. A device according to claim 1, wherein one (1) of said stretching screws is rotatably mounted on stationary supports, while the other screw (101) is mounted on swinging supports (2) which are connected to adjustable resilient means (4), so as to be resiliently urged towards the stationary screw, said swinging supports or parts associated therewith being shaped so as to co-operate with small rollers (7) mounted on the body of the web-stretching comb (P) when the latter is moved vertically at the beginning of each operative cycle, so as to space the movable screw (101) from the stationary screw (1) to avoid any interference of said screws with said comb, the stationary screw (1) being normally in such a position as to avoid interfering with said comb.

9. A device according to claim 1, wherein the stationary screw (1) is arranged close to the overlying needle-bar (FA), while the movable screw (101) is arranged below said stationary screw, so as to be far from the respective needle-bar (FP) to be moved unhindered thereby and to compel the web (T) to extensively enwrap said screws so as to be efficiently stretched thereby.

10. A device according to claim 1, wherein the stretching screws (1-101) are engaged in end supports comprising open top groove (8) so as to be easily disengaged from said supports whenever required.

11. A device according to claim 1, wherein the stretching screws (1-101) are connected at one end thereof, through small universal joints (13-113) to the shafts of a pair of gearwheels (14-114) having the same diameter and meshing with each other, one of which is keyed on the slow-rotating shaft of a variable-speed motor-reducer (15) which, preferably, is controlled by the computer (C) provided for the machine so as to rotate at a speed which is proportional to the speed of the carriage of said knitting machine, means (17) being preferably provided to permit the precision adjustment of the speed of rotation of the stretching screws to match it, if desired, to specific requirements.

12. A device according to claim 11, wherein the actuation logic of the stretching screws (1-101) is such that said screws usually rotate continuously during the normal operation of the knitting machine, while they are stopped when the machine carriage is stopped and, preferably, also during the operative step of the side-transport devices.

13. A device according to claim 11, characterized in that, the actuation logic of the stretching screws (1-101) is such that said screws rotate intermittently during the normal operation of the knitting machine whereon they are mounted, while they are stopped when the machine carriage is stopped and, preferably, also during the operative step of the side-transport devices.

## Patentansprüche

1. Automatische Vorrichtung zum longitudinalen und transversalen Abziehen eines gestrickten Stoffs (T), der auf einer Flachstrickmaschine hergestellt wird, wobei sich die automatische Vorrichtung in geringem Abstand vom oberen Ende der Flachstrickmaschine befindet und in Querrichtung auf den von dieser erzeugten Stoff (T) wirkt, **dadurch gekennzeichnet,** daß sie ein paar unterhalb der Nadelstangen (FA, FP) angeordnete, parallele Schrauben (1, 101) aufweist, deren jede mit zwei Gewindeabschnitten entgegengesetzter Steigungsrichtung versehen ist und mit ihrer Gewindespitze jeweils in die Nut zwischen den Gewindegängen der anderen Schraube eingreift, und die beide synchron mit einer solchen Drehrichtung und Geschwindigkeit rotierend antreibbar sind, daß der von der Maschine erzeugte Stoff (T) in Längs- und Querrichtung gestreckt wird, so daß die mit den Nadeln der Maschine zusammenwirkenden Schlingen immer im besten Zustand sind, um von den Stangen und/oder Nadeln der automatischen Seitentransportvorrichtungen erfaßt zu werden.

2. Vorrichtung nach Anspruch 1, **dadurch gekennzeichnet,** daß die Streckschrauben (1, 101) ein Gewinde mit gerundeter Kontur haben.

3. Vorrichung nach Anspruch 1, **dadurch gekennzeichnet,** daß die Streckschrauben (1, 101) ein Gewinde mit einer Kontur vom Edison-Typ haben.

4. Vorrichtung nach Anspruch 1, **dadurch gekennzeichnet,** daß das Gewinde der Streckschrauben (1, 101) ein zweigängiges oder mehrgängiges Gewinde ist.

5. Vorrichtung nach Anspruch 1, **dadurch gekennzeichnet,** daß die Gewinde der Streckschrauben (1, 101) eine Steigung haben, die proportional der Feinheit der Strickmaschine ist, auf der sie montiert sind.

6. Vorrichtung nach Anspruch 5, **dadurch gekennzeichnet,** daß die Gewindesteigung der Streckschrauben (1, 101) 3,5 zweigängige Windungen pro 2,54 cm beträgt, wenn die Schrauben zur Anwendung auf einer Flachstrickmaschine mit einer Feinheit von sieben Nadeln pro 2,54 cm kommen.

7. Vorrichtung nach Anspruch 1, **dadurch gekennzeichnet,** daß die Streckschrauben (1, 101) verchromt und poliert oder in anderer Weise so behandelt sind, daß die Gleitreibung im Zusammenwirken mit dem zu streckenden gewirkten Stoff (T) gering ist.

8. Vorrichtung nach Anspruch 1, **dadurch gekennzeichnet,** daß eine der Streckschrauben drehbar an einer stationären Abstützung gelagert ist, während die andere Schraube (101) an verschwenkbaren Stützen (2) gelagert ist, die mit einstellbaren, elastisch nachgiebigen Mitteln (4) verbunden sind, so daß diese Schraube elastisch nachgiebig zur stationären Schraube hin gedrängt wird, wobei die verschwenkbaren Stützen oder damit verbundenen Teile so geformt sind, daß sie mit kleinen Rollen (7), die am Körper des den Stoff streckenden Kamms (P) montiert sind, zusammenwirken, wenn der letztere zu Beginn jedes Arbeitszyklus vertikal bewegt wird, um auf diese Weise die bewegliche Schraube (101) von der stationären Schraube (1) zu entfernen und ein Zusammenstoßen der Schrauben mit dem Kamm zu vermeiden, wobei die stationäre Schraube (1) sich normalerweise in einer position befindet, in welcher das Zusammenstoßen mit dem Kamm vermieden wird.

9. Vorrichtung nach Anspruch 1, **dadurch gekennzeichnet,** daß die stationäre Schraube (1) nahe der darüberliegenden Nadelstange (FA) angeordnet ist, während die bewegliche Schraube (101) unterhalb der stationären Schraube angeordnet ist, um von der zugeordneten Nadelstange (FP) entfernt zu sein und ungehindert von dieser bewegt werden zu können, und um den Stoff (T) zu zwingen, die Schrauben weitergehend zu umhüllen und dadurch wirksam gestreckt zu werden.

10. Vorrichtung nach Anspruch 1, **dadurch gekennzeichnet,** daß die Streckschrauben (1, 101) in Endabstützungen eingreifen, welche eine offene obere Nut (8) aufweisen, so daß sie bei Bedarf leicht von den Stützen lösbar sind.

11. Vorrichtung nach Anspruch 1, **dadurch gekennzeichnet,** daß die Streckschrauben (1, 101) mit ihrem einen Ende über kleine Universalgelenke (13, 113) mit den Wellen eines Zahnradpaars (14, 114) verbunden sind, die denselben Durchmesser haben und miteinander kämmen und deren eines auf die langsam rotierende Welle einer mit unterschiedlichen Geschwindigkeiten betreibbaren Motor-Untersetzungs-Getriebeeinheit (15) aufgekeilt ist, die vorzugsweise durch einen für die Maschine vorgesehenen Computer (C) gesteuert ist, so daß sie mit einer zur Geschwindigkeit des Wagens der Strickmaschine proportionalen Geschwindigkeit rotiert, wobei vorzugsweise Mittel (17) vorhanden sind, welche eine präzise Einstellung der Drehgeschwindigkeit der Streckschrauben gestatten, um sie bestimmten Anforderungen anzupassen.

12. Vorrichtung nach Anspruch 11, **dadurch gekennzeichnet,** daß das Steuerprogramm die Streckschrauben (1, 101) normalerweise während einer normalen Arbeitsoperation der Strickmaschine kontinuierlich rotieren läßt und sie anhält, wenn der Maschinenwagen angehalten wird, und vorzugsweise auch während des Betriebs der Seitentransportvorrichtungen.

13. Vorrichtung nach Anspruch 1, **dadurch gekennzeichnet,** daß das Steuerprogramm die Streckschrauben (1, 101) während des normalen Betriebs der Strickmaschine, an welcher sie angebracht sind, intermittierend rotieren läßt und sie anhält, wenn der Maschinenwagen angehalten wird und vorzugsweise auch während des Betriebs der Seitentransportvorrichtungen.

## Revendications

1. Dispositif automatique pour étirer à la fois dans la direction longitudinale et dans la direction transversale une nappe (T) tricotée en cours de fabrication par des métiers à tricoter rectilignes, le dispositif automatique étant placé à une courte distance de l'extrémité supérieure des barres à aiguilles et de façon à agir transversalement sur la nappe (T) en cours de fabrication par le métier, caractérisé en ce qu'il comprend une paire de vis parallèles (1-101) disposées sous les barres à aiguilles (FA-FP), chaque vis (1-101) comportant deux parties filetées en opposition, la crête des filets d'une vis (1) venant s'engager dans la gorge entre filets de la vis opposée (101), lesdites vis (1, 101) étant actionnées en synchronisme dans un sens de rotation et à une vitesse tels que la nappe (T) en cours de fabrication par le métier soit soumise à un étirement adéquat à la fois dans la direction longitudinale et dans la direction transversale, de façon que les mailles coopérant avec les aiguilles du métier soient toujours dans la meilleure position pour être saisies par les tiges et/ou les aiguilles des dispositifs automatiques de déplacement latéral.

2. Dispositif selon la revendication 1, dans lequel les vis d'étirement (1-101) ont un filetage à profil arrondi.

3. Dispositif selon la revendication 1, dans lequel les vis d'étirement (1-101) ont un filetage à profil du type Edison.

4. dispositif selon la revendication 1, dans lequel le filetage des vis d'étirement (1-101) est un filetage à filets doubles ou multiples.

5. Dispositif selon la revendication 1, dans lequel les filets des vis d'étirement (1-101) ont un pas qui est proportionnel à la finesse du métier à tricoter sur lequel les vis sont montées.

6. Dispositif selon la revendication 5, dans lequel le pas du filetage des vis d'étirement (1-101) comprend 3,5 filets doubles par pouce lorsque lesdites vis sont réalisées pour être montées sur des métiers à tricoter rectilignes ayant une finesse de 7 aiguilles par pouce.

7. Dispositif selon la revendication 1, dans lequel les vis d'étirement (1-101) sont chromées et polies ou traitées d'une autre manière pour avoir un frottement de coulissement réduit lors de leur coopération avec la nappe tricotée (T) à étirer.

8. Dispositif selon la revendication 1, dans lequel l'une (1) desdites vis d'étirement est montée en rotation sur des supports fixes, tandis que l'autre vis (101) est montée sur des supports oscillants (2) qui sont reliés à des moyens élastiques réglables (4), de façon à être sollicités de manière élastique en direction de la vis fixe, lesdits supports ou pièces oscillants associés à cette vis étant profilés de manière à coopérer avec de petits galets (7) montés sur le corps du peigne (P) d'étirement de la nappe lorsque le peigne est déplacé verticalement au début de chaque cycle opératoire, afin d'écarter la vis mobile (101) de la vis fixe (1) pour éviter toute interférence entre lesdites vis et ledit peigne, la vis fixe (1) étant normalement dans une position qui évite l'interférence avec ledit peigne.

9. Dispositif selon la revendication 1, dans lequel la vis fixe (1) est disposée à proximité de la barre à aiguilles du dessus (FA), tandis que la vis mobile (101) est placée sous ladite vis fixe, afin d'être éloignée de la barre à aiguilles correspondante (FP) et être déplacée sans être gênée par cette barre et à forcer la nappe (T) à se dérouler desdites vis en sorte d'être ainsi étirée efficacement.

10. Dispositif selon la revendication 1, dans lequel les vis d'étirement (1-101) sont engagées dans des supports d'extrémité comportant une rainure supérieure ouverte (8) de manière à être facilement dégagées desdits supports chaque fois que cela est nécessaire.

11. Dispositif selon la revendication 1, dans lequel les vis d'étirement (1-101) sont reliées à l'une de leurs extrémités, par l'intermédiaire de petits joints d'articulation universels (13-113) aux arbres d'une paire de roues dentées (14-114) ayant le même diamètre et en prise mutuelle, l'une d'elles étant clavetées sur l'arbre à rotation lente d'un moteur réducteur à vitesse variable (15) qui, de préférence, est commandé par l'ordinateur (C) monté sur le métier de manière à tourner à une vitesse qui est proportionnelle à la vitesse du chariot dudit métier à tricoter, des moyens (17) étant de préférence installés pour permettre un réglage précis de la vitesse de rotation des vis d'étirement pour satisfaire, si on le désire, des exigences particulières.

12. Dispositif selon la revendication 11, dans lequel la logique de commande des vis d'étirement (1-101) est telle que lesdites vis tournent habituellement en continu pendant le fonctionnement normal du métier à tricoter, tandis qu'elles sont arrêtées quand le chariot du métier est arrêté et, de préférence, également pendant la phase de fonctionnement des dispositifs de déplacement latéral.

13. Dispositif selon la revendication 11, caractérisé en ce que la logique de commande des vis d'étirement (1-101) est telle que lesdites vis tournent par intermittence au cours du fonctionnement normal du métier à tricoter sur lequel elles sont montées, tandis qu'elles sont arrêtées quand le chariot du métier est arrêté et, de préférence également, pendant la phase de fonctionnement des dispositifs de déplacement latéral.

Fig. 5

Fig. 2

Fig. 1

Fig. 4

Fig.7

Fig.6

Fig.8

Fig.3